# FASCICULE DE BREVET EUROPEEN

(11) **EP 0 676 039 B1**
(45) Date de publication et mention de la délivrance du brevet: **06.08.1997**
(21) Numéro de dépôt: 94904648.6
(22) Date de dépôt: 10.01.1994
(51) Int. Cl.: G01H 9/00, G01V 7/04

(54) **DISPOSITIF DE DETECTION DE MICROVIBRATIONS DE TRES FAIBLE AMPLITUDE**
MIKROVIBRATIONSFÜHLGERÄT FÜR SEHR NIEDRIGER AMPLITUDE
VERY LOW AMPLITUDE MICROVIBRATION SENSING DEVICE

(30) Priorité: 15.01.1993 LU 88211
(43) Date de publication de la demande: 11.10.1995
(73) Titulaire: COMMUNAUTE ECONOMIQUE EUROPEENNE (CEE), L-2920 Luxembourg (LU)
(72) Inventeur: COUTSOMITROS, Constantin, I-21020 Ranco (IT)
(74) Mandataire: Weinmiller, Jürgen
(86) Numéro de dépôt international: EP9400050
(87) Numéro de publication internationale: WO9416296

(56) Documents cités:
- US-A- 4 188 096
- JOURNAL OF PHYSICS E. SCIENTIFIC INSTRUMENTS, vol.12, no.11, Novembre 1979, BRISTOL, GB pages 1043 - 1050 BILLING ET AL 'an argon laser interferometer for the detection of gravitational radiation'

## Description

L'invention se réfère à un dispositif de détection de micro-vibrations de très faible amplitude, qui est susceptible, grâce à sa sensibilité extraordinaire, de capter des vibrations d'une amplitude de 10⁻²⁰m et moins.

La théorie de la relativité générale prévoit que la gravité se propage en ondes causées par d'énormes masses en mouvement. Si une onde gravitationnelle arrive sur la terre, elle provoque des changements de la géométrie de tout objet, tels que la dilatation dans une direction et la contraction dans une autre. L'estimation théorique de ces changements de dimension les situe dans l'ordre de grandeur de 10⁻²⁰m et moins. Les meilleurs instruments de mesure de vibration qui sont actuellement disponibles sont des interféromètres optiques ou des systèmes de transducteur cryogéniques qui arrivent à capter des déplacements jusqu'à 10⁻¹⁸m, ce qui est insuffisant pour les mesures évoquées ci-dessus. On connaît un projet américain s'appelant LIGO (Laser Interferometer for Gravitational Waves Observatory), qui utilise un interféromètre de Michelson, dont chaque branche a une longueur de 6 km. Ce projet sera opérationnel probablement en 1998, et on compte sur une résolution de 10⁻²¹ m.

Le but de la présente invention est de procurer un dispositif de détection de micro-vibrations, qui est notablement moins encombrant que le projet LIGO et moins coûteux, et qui est capable également de capter des micro-mouvements d'une amplitude de 10⁻²⁰ et même moins.

Selon l'invention, ce but est atteint par le fait que le dispositif comporte
- une cavité optique composée d'une plaque en verre enserrée entre deux réseaux interférométriques tridimensionnels, ladite plaque étant en contact avec un corps dont les micro-vibrations sont à détecter, et les deux réseaux interférométriques reposant par gravité sur des appuis solidaires audit corps,
- une source de lumière cohérente illuminant un premier des deux réseaux de ladite cavité optique,
- et un écran de visualisation recevant la lumière réfléchie de cette cavité optique.

En ce qui concerne des caractéristiques d'une mise en oeuvre préférée de l'invention, référence est faite aux revendications secondaires.

Ci-après, l'invention sera décrite plus en détail à l'aide d'un exemple de réalisation et de quatre figures, qui se réfèrent à une réalisation de laboratoire.

Figure 1 montre en vue de dessus une table optique, sur laquelle est monté le dispositif selon l'invention.

Figure 2 représente le même dispositif vu de côté.

Figure 3 montre la cavité optique du même dispositif vu d'en face.

Figure 4 montre en représentation éclatée la cavité optique faisant partie du dispositif selon l'invention.

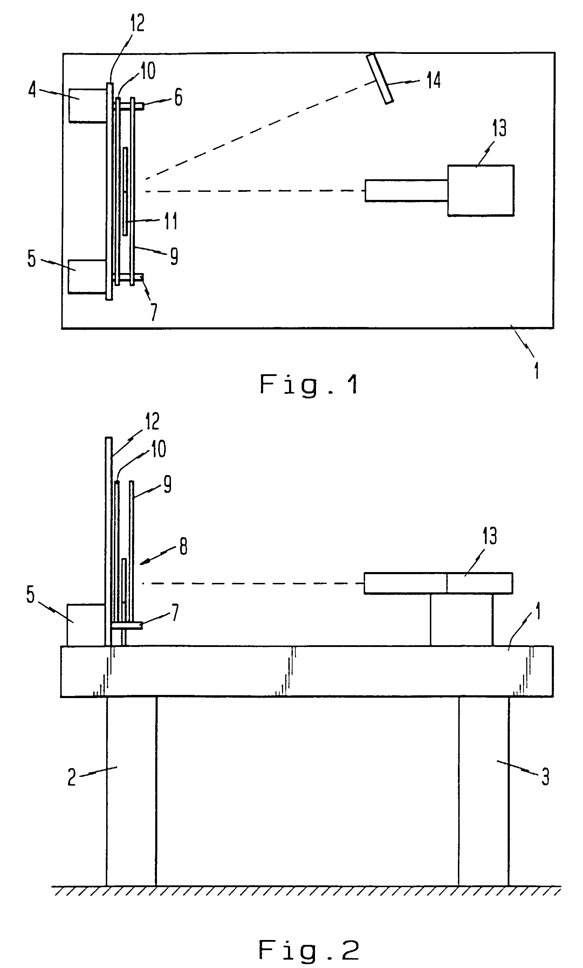

Sur les figures 1 à 3, on voit trois vues orthogonales du dispositif selon l'invention. Il a été conçu pour capter des ondes gravitationnelles et à ces fins il a été monté sur une table optique 1, dont les pieds 2 et 3 sont munis de moyens d'amortissement (non visibles) des vibrations de sol pour isoler la table des vibrations provenant de la terre. De tels moyens sont bien connus pour les tables optiques et ne nécessitent pas être décrits ici en détail.

La table 1 est en acier et pèse par exemple sans pieds 360 kg.

Sur cette table, on a posé deux socles 4 et 5, qui se maintiennent sur la table par des forces magnétiques et qui sont conventionnels dans le domaine des essais optiques. Chacun de ces socles présente une barre de support 6 et 7, qui s'étend parallèlement à la surface de la table et qui supporte une cavité optique 8.

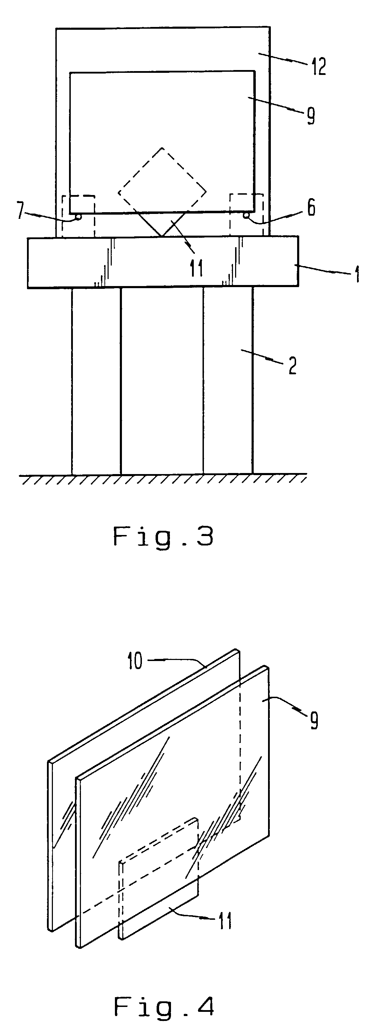

Cette cavité optique est représentée plus en détail à la figure 4 et comporte deux substrats en verre 9 et 10, qui enserrent entre eux une plaque en verre 11. Les dimensions des substrats sont par exemple 30 à 40 cm, alors que la plaque en verre 11 est une plaque carrée de 10 cm de long et de 1 mm d'épaisseur. Chaque substrat porte sur une face (extérieure ou intérieure) une émulsion photographique, sur laquelle on a préalablement enregistré un réseau interférométrique. De tels réseaux sont connus et sont réalisés en illuminant l'émulsion par deux ondes sphériques provenant d'une source de lumière cohérente.

La plaque en verre 11, dont la majeure partie est enserrée entre les substrats 9 et 10, s'étend par une extrémité au-delà de la portée de ces deux plaques et repose par cette extrémité sur la table 1. Cette extrémité peut être soit la tranche d'un côté de la plaque tel que représenté sur la figure 4, soit le coin entre deux bords de la plaque tel que représenté sur la figure 3.

Sur les dessins 1 à 3, les composants de la cavité optique 8 ont été représentés avec un écart entre eux pour mieux distinguer ces différents composants, mais bien sur, un tel écart n'existe pas en pratique.

En effet, les deux substrats et la plaque en verre ont des grandes surfaces planes et une fois assemblés se tiennent ensemble par l'impossibilité pour l'air de pénétrer entre la plaque et les substrats. La cavité optique repose sur les barres de support 6 et 7 par simple gravité et elle est maintenue en position verticale sur la table (qui est horizontale) par un fond 12 constitué par une plaque métallique et fixé par les forces magnétiques évoqués ci-dessus sur les socles 4 et 5.

On peut considérer cette cavité optique 8 comme un capteur des micro-mouvements de la table 1, car la plaque en verre définit entre elle et les deux substrats 9 et 10 des couches minces d'air qui sont modifiées par les vibrations de la table 1. En illuminant la cavité optique avec de la lumière cohérente provenant d'un laser 13, on observe des franges d'interférence sur un écran de visualisation 14 qui se mettent en mouvement corrélé auxdites vibrations. Le cas échéant, on peut remplacer cet écran de visualisation par un système de photodétecteurs suivi d'un traitement automatique de l'image pour élaborer la corrélation des mouvements dans l'image.

A cause de la grande sensibilité du dispositif décrit ci-dessus, il est nécessaire de prendre quelques précautions lors des essais. Ainsi, il faut commander et surveiller les essais à grande distance pour éviter que les mouvements provenant du personnel ou de l'équipage d'exploitation faussent les résultats. Malgré ces précautions et d'une suspension très élaborée de la table permettant d'isoler la table des vibrations de fond, il est nécessaire de faire les essais la nuit et en zone rurale pour éliminer au maximum de bruit de fond. En outre, il faut étudier en détail l'influence des conditions atmosphériques (pression d'air, température), car ces conditions peuvent avoir une influence sur le bon fonctionnement des amortisseurs de la table, qui sont des amortisseurs pneumatiques.

Après ces remarques préliminaires, quelques essais montrant le fonctionnement du dispositif sont rapportés.

### 1er essai (gravitationnel)

Une masse non métallique (pour éliminer les effets magnétiques avec la surface de la table) est suspendue au-dessus de la table. Les franges d'interférence observées sur l'écran 14 ont alors subi un déplacement notable par rapport au cas où il n'y avait pas cette masse. En plaçant cette masse en-dessous de la table, un déplacement similaire des franges a pu être observé, mais en sens contraire. La force gravitationnelle entre deux masses (la seconde masse est la table) étant attractive, les effets de la masse non magnétique sur la table doivent en effet être de signe opposé, si la masse se trouve au-dessus ou en-dessous de la table.

### 2ème essai (gravitationnel)

Une personne est mise en rotation lente à une distance de 35 m du détecteur en dehors du laboratoire. Les franges observées sur l'écran 14 (et transmises par une caméra de télévision vers un lieu d'observation éloigné) se déplacent alors vers une direction. Si on change maintenant la direction de rotation, on observe une grande perturbation des franges au moment de l'inversion du mouvement, puis les franges se déplacent dans l'autre sens par rapport au cas précédent.

### 3ème essai (sismique)

Si on désactive les moyens amortisseurs de la table, on peut transmettre les mouvements de la terre sur la table et capter ainsi des mouvements sismiques à condition que les essais sont faits dans une région où le bruit de fond n'est pas prépondérant.

Une estimation théorique des micro-mouvements que le dispositif selon l'invention est capable d'enregistrer conduit à des amplitudes minimum détectées qui sont 10⁻²⁰m (le rayon de l'électron étant de l'ordre de 10⁻¹⁵m!). Cette amplitude pourrait être encore plus petite en perfectionnant les pieds de la table, car la table, bien qu'ayant quelques degrés de liberté de se mettre en mouvement, ne peut pas être considérée comme étant complètement libre. En outre, une augmentation des dimensions de la cavité optique 8 et de celles de la table pourraient encore baisser la limite de sensibilité du dispositif.

En considération de cette sensibilité, le problème de bruit de fond exige un traitement intelligent des images captées sur l'écran pour extraire des signaux utiles du bruit. Ce traitement d'images est effectué dans des ordinateurs et se base sur une corrélation des différentes images. Cette corrélation peut être perfectionnée en comparant dans une phase d'entraînement les mouvements des franges avec les mouvements de la source qui a provoqué ces micro-mouvements.

A part des applications visées dans les essais reportés ci-dessus, le dispositif selon la présente invention pourrait être utilisé comme un radar passif. La haute sensibilité du dispositif aux interactions gravitationnelles pourrait en effet servir à la détection des masses en mouvement comme par exemple des avions. Un tel radar est purement passif, car il n'emploie pas un signal d'interrogation.

L'invention n'est pas limitée au dispositif représenté sur les dessins, dispositif qui est un ensemble de laboratoire, et toute modification visant une application industrielle du dispositif est comprise dans la portée de l'invention telle que revendiquée.

## Revendications

1. Dispositif de détection de micro-vibrations de très faible amplitude d'un corps, caractérisé en ce qu'il comporte
- une cavité optique (8) composée d'une plaque en verre (11) enserrée entre deux réseaux interférométriques tridimensionnels (9, 10), ladite plaque étant en contact avec ledit corps et les deux réseaux interférométriques reposant par gravité sur des appuis solidaires audit corps,
- une source de lumière (13) cohérente illuminant un premier (9) des deux réseaux de ladite cavité optique (8),
- et un écran de visualisation recevant la lumière réfléchie de cette cavité optique.

2. Dispositif selon la revendication 1, caractérisé en ce que l'écran (14) est suivi d'un système de traitement d'image.

3. Dispositif selon l'une des revendications 1 à 2 pour détecter les micro-vibrations gravitationnelles d'une table, caractérisé en ce que la cavité optique (8) est montée sur ladite table (1) qui repose sur un système d'amortissement (2, 3) permettant d'isoler la table des vibrations du sol.

4. Dispositif selon l'une des revendications 1 à 3, caractérisé en ce que les réseaux interférométriques sont inscrits chacun dans un substrat en verre (9, 10) de dimensions notablement plus grandes que celles de ladite plaque (11) et que la cavité optique repose verticalement par gravité sur deux barres support (6, 7) qui sont hors de portée de ladite plaque (11).

5. Dispositif selon la revendication 4, caractérisé en ce que le dos de la cavité optique (8) est plaqué contre un fond métallique (12).

## Patentansprüche

1. Vorrichtung zur Erfassung von Mikrovibrationen sehr schwacher Amplitude eines Körpers, dadurch gekennzeichnet, daß die Vorrichtung aufweist:
- einen optischen Hohlraum (8) bestehend aus einer Glasplatte (11), die zwischen zwei dreidimensionalen interferometrischen Netzen (9, 10) eingefügt ist, wobei diese Platte mit dem Körper in Kontakt steht und die beiden interferometrischen Netze durch Schwerkraft auf mit diesem Körper fest verbundenen Auflagen liegen,
- eine kohärente Lichtquelle (13), die ein erstes der beiden Netze (9) des optischen Hohlraums (8) beleuchtet,
- und einen Anzeigeschirm, der das von diesem optischen Hohlraum reflektierte Licht empfängt.

2. Vorrichtung nach Anspruch 1, dadurch gekennzeichnet, daß auf den Bildschirm (14) ein Bildverarbeitungssystem folgt.

3. Vorrichtung nach einem der Ansprüche 1 und 2, um die Schwerkraft-Mikrovibrationen eines Tischs zu erfassen, dadurch gekennzeichnet, daß der optische Hohlraum (8) auf dem Tisch (1) montiert ist, der auf einem Dämpfungssystem (2, 3) ruht, welches den Tisch gegen die Vibrationen des Bodens isoliert.

4. Vorrichtung nach einem der Ansprüche 1 bis 3, dadurch gekennzeichnet, daß die interferometrischen Netze je in ein Glassubstrat (9, 10) eingeschrieben sind, dessen Abmessungen wesentlich größer sind als die der Platte (11), und daß der optische Hohlraum durch Schwerkraft senkrecht auf zwei Stützstäben (6, 7) ruht, die außerhalb der Reichweite der Platte (11) liegen.

5. Vorrichtung nach Anspruch 4, dadurch gekennzeichnet, daß die Rückseite des optischen Hohlraums (8) gegen eine Metallstütze (12) angelegt ist.

## Claims

1. A device for detecting micro-vibrations of very low amplitude of a body, characterized in that the device comprises
- an optical cavity (8) composed of a glass plate (11) inserted between two three-dimensional interferometric networks (9, 10), said plate being in contact with said body, and the two interferometric networks resting by gravity on supports integral with said body,
- a coherent light source (13) illuminating a first one (9) of the two networks of said optical cavity (8),
- and a display screen receiving the light reflected by this optical cavity.

2. A device according to claim 1, characterized in that the screen (14) is followed by an image processing system.

3. A device according to one of claims 1 and 2 for detecting the gravitational micro-vibrations of a table, characterized in that the optical cavity (8) is mounted on said table (1) which rests on a shock-absorbing system (2, 3) permitting to isolate the table from ground vibrations.

4. A device according to one of claims 1 to 3, characterized in that the interferometric networks are registered each in a glass substrate (9, 10) whose dimensions are notably larger than those of said plate (11) and that the optical cavity rests vertically by gravity on two support bars (6, 7) which are out of range of the said plate (11).

5. A device according to claim 4, characterized in that the rear side of the optical cavity (8) is placed against a metal backup (12).
